# EUROPEAN PATENT APPLICATION

(11) **EP 1 742 437 A1**
(43) Date of publication of application: **10.01.2007**
(21) Application number: 05291467.8
(22) Date of filing: 06.07.2005
(51) Int. Cl.: H04L 29/06

(54) **Provision of a telecommunication connection**

(71) Applicant: ALCATEL, 75008 Paris (FR)
(72) Inventor: Drewniok Dipl.Ing., Marc, 70376 Stuttgart (DE); Sienel Dipl.Inf., Jürgen, 71229 Leonberg (DE); Noe Dipl.Ing., Bernhard, 70736 Fellbach (DE)
(74) Representative: LOUIS, PÖHLAU, LOHRENTZ

(57) **Abstract**

The present invention relates to a method for providing a telecommunication connection (1020, 1121, 1222) and a server (30) for supporting said telecommunication connection (1020, 1121, 1222). A telecommunication connection (1020, 1121, 1222) is established between telecommunication terminals (10, 11, 12. 20, 21, 22) assigned to telecommunication participants and streamed media are exchanged between said telecommunication terminals (10, 11, 12, 20, 21, 22). When a pre-defined trigger event during said telecommunication connection (1020, 1121, 1222) is detected, a data base (50) is accessed for retrieving a media resource associated with said trigger event. The retrieved media resource is injected in the exchanged streamed media during said telecommunication connection (1020, 1121, 1222).

## Description

The invention relates to a method of providing a telecommunication connection and a server for executing the method.

Today's telecommunication offers a great choice of multimedia possibilities. The IMS standard defines a generic architecture for defining multimedia services (IMS = Internet protocol Multimedia Subsystem). For users, IMS-based services enable person-to-person and person-to-content communications in a variety of ; modes - including voice, text, pictures and video, or any combination of these - in a highly personalized and controlled way. Combinational services enable the , user to instantly and interactively share information such as images, live video and web content with the person they are talking to, while talking.

Video sharing lets telecommunication partners view a live video or a video clip in real time during a normal voice call, Sent from one phone to the other, both speakers can see the same video and discuss it, and then end the video sharing without ending the voice call.

Personalised ringtones and jingles can be used to signalise the calling party of an incoming call. A user assigns different ringtones to his buddies' telephone numbers. With the help of Calling Line Identification Services, the originating telephone number of an incoming waiting call can be retrieved and the associated ringtone can be implemented. Therefore, the called party knows already from the sound pattern of their ringing phone who is calling.

It is the object of the present invention to provide an improved telecommunication connection.

The object of the present invention is achieved by a method of providing a telecommunication connection, the method comprising the steps of establishing a telecommunication connection between telecommunication terminals assigned to telecommunication participants, exchanging streamed media between said telecommunication terminals, whereby the method further comprises the steps of, when detecting a pre-defined trigger event during said telecommunication connection, accessing a data base for retrieving a media resource associated with said trigger event, injecting said media resource in the exchanged streamed media during said telecommunication connection. The object of the present invention is further achieved by a server for supporting a telecommunication connection which is established between telecommunication terminals assigned to telecommunication participants for the exchange of streamed media between said telecommunication terminals, whereby the server comprises a detector unit for detecting a pre-defined trigger event during said telecommunication connection and a control unit which is adapted to access, when the detector unit detects a pre-defined trigger event during said telecommunication connection, a data base for retrieving a media resource associated with said trigger event and inject said media resource in the exchanged streamed media during said telecommunication connection.

The invention provides a way to embed multimedia data such as audio data or video data in a communication, therefore enhancing information exchange. The invention improves the comfort and the fun factor of communication, It represents an attractive new service for existing service architectures such as the IMS which provides services in the network and controls the realtime protocol streams for the communication.

Further advantages are achieved by the embodiments of the invention indicated by the dependent claims.

According to a preferred embodiment of the invention, the method comprises the step that a user profile assigned to one of the telecommunication participants is created, whereby said user profile comprises an association between the trigger event and the media resource as defined by the one of said telecommunication participants. Every participant of the telecommunication connection using the service provided by the described method has a user profile of his own. The user profiles have to be created in advance to the establishment of the communication connection and are stored in a data base of the server which is accessible both by the control unit of the server and the telecommunication participants. The control unit accesses the data base to select the user profiles available for the telecommunication participants and provides a detector unit with information about the trigger events defined in said user profiles. The detector unit monitors said telecommunication connection for detection of said trigger events during said telecommunication connection.

The invention provides a method to mix the content of pre-selected multimedia data with the real-time media stream of a communication service. The method according to the invention can be applied to any multimedia data such as text, still picture, audio, video.

The method according to the invention preferably provides two services, the service "context sensitive medium" and the service "push for media".

According to a preferred embodiment of the invention, the so-called "push for media" embodiment, said trigger event is represented by the pressing of a button on a telecommunication terminal. A participant using the service according to the invention has to pre-define a button on his communication equipment and an associated media file and submit this information to the respective server. Usually, these definition and submission processes will be achieved by help of an appropriate software, preferably installed on the telecommunication terminal of the participant. The detector unit of the server monitors the signalling channels, preferably also the bearer channels, of the connection to detect the pressing of a button on a telecommunication terminal. When during the ongoing communication the participant presses the pre-defined button on his telecommunication terminal, the detector unit detects the pressing of the button, preferably by detecting DTMF signals, and notifies the control unit to trigger the import of the associated media file (DTMF = Dual Tone Multiple Frequency).

Further, it is possible that said trigger event is defined as a communication context related event, representing the so-called " context sensitive medium" embodiment of the invention. A communication context related event is the occurence of a specific communication pattern or event such as laughter, a speech pause, or the utterance of a keyword like, e.g., "holiday movie" during the ongoing communication. Again, the participant must have pre-defined the pattern of the trigger event and submitted the corresponding information to the server. Also, the participant must have determined the associated media file. The detector unit of the server monitors the exchanged streamed media of the connection, e.g., sent over a bearer channel, to detect the communication context related event.

It is also possible that a trigger event is represented by an external trigger signal from a sensor outside of the communication connection environment, i.e., the trigger event is neither associated with the communication content nor with the communication terminals. Instead, it is a trigger event from "outside", possibly released by a autonomous sensor. The external trigger event may be transmitted to the server via a dedicated trigger channel independent from the communication connection channels, or via the bearer and signalling channels of the connection.

According to a preferred embodiment of the invention, a participant of a communication has uploaded a media resource, e.g., an audio file created and prepared by himself, to a central data base. The central data base is used for storage of the transmitted media files. The control unit has access to the central data base and can retrieve the media file corresponding to the detected trigger event.

Preferably; the server further comprises a data base, whereby the server is adapted to create a user profile assigned to one of said telecommunication participants. The user profile comprises an association between a trigger event and a media resource as defined by the one of said telecommunication participants. The server is further adapted to store said user profile in the data base, select the user profiles available for said telecommunication participants from the data base, provide the detector unit with information about the trigger events defined in said user profiles, and monitor by means of said detector unit said telecommunication connection for detection of said trigger events during said telecommunication connection. Preferably, the control unit of the server is adapted to create and store said user profiles, and provide the detector unit with user profile data.

According to another preferred embodiment of the invention, the server for providing a telecommunication connection is an autonomous network node. It is also possible that the server is locally implemented as a module of a telecommunication terminal. It is possible that a part of the participants of a telecommunication connection is provided with telecommunication connection by means of a central server and that the other part of the participants is served by local servers on their telecommunication terminals. It is also possible that a part of the functionality is provided by a central server and another part is provided , by a local server.

These as well as further features and advantages of the invention will be better appreciated by reading the following detailed description of presently preferred exemplary embodiments taken in conjunction with accompanying drawings of which:
- Fig. 1: is a block diagram of a system according to a first embodiment of the invention.
- Fig. 2: is a block diagram of a user profile data base according to a first embodiment of the invention.
- Fig. 3: is a message sequence chart according to a first embodiment of the invention.

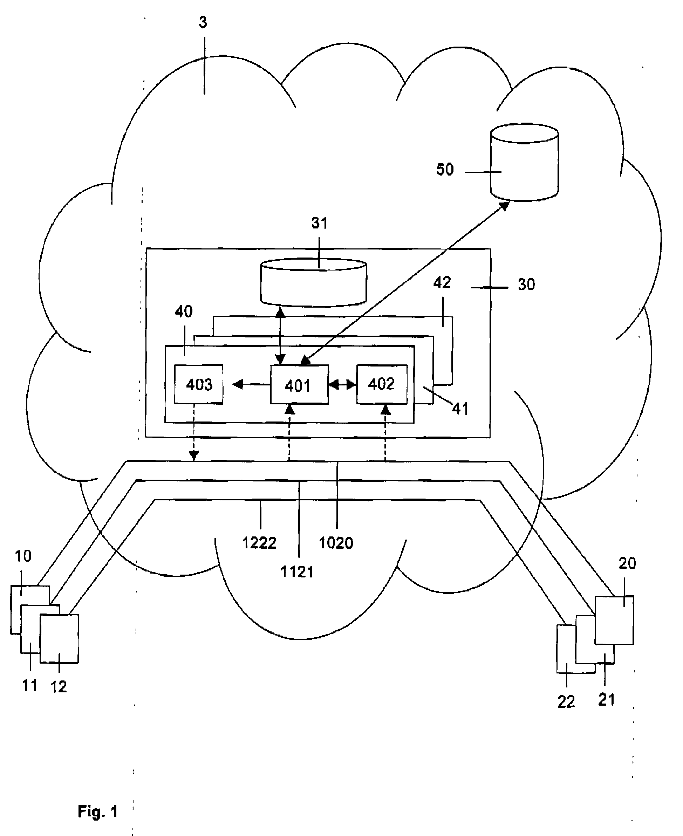

Fig. 1 shows a plurality of telecommunication connections 1020, 1121, 1222 via a telecommunication network 3. In the described embodiment, each of the telecommunication connections 1020, 1121, 1222 is established between a first telephone terminal 10, 11, 12 and a second telephone terminal 20, 21, 22. The telephone terminals 10, 11, 12, 20, 21, 22 are used by participants of a voice connection to communicate via the telecommunication network 3. It is also possible that the telecommunication connections 1020, 1121, 1222 are between three or more participants, forming a conference connection.

It is possible that the telephone terminals 10, 11, 12, 20, 21, 22 are mobile telephones, e.g., cellular phones, capable to play audio and/or video data. But it is also possible that the telephone terminals 10, 11, 12, 20, 21, 22 are fixed/wireiine telephone terminals, VolP phones, or any other multimedia-capable communication connection (VoIP = Voice over Internet Protocol).

The telephone terminals 10, 11, 12, 20, 21, 22 may comprise an electronic circuit, possibly with a radio part for wireless telecommunication, at least one microprocessor, and application programs executed by the at least one microprocessor. The terminals 10, 11, 12, 20, 21, 22 further comprise input and output means, for example a keypad, a microphone, a loudspeaker, and a display, The functionalities of the terminals 10, 11, 12, 20, 21, 22 are performed by the interaction of the hardware and software components. The terminals 10, 11, 12, 20, 21, 22 may be adapted to receive and store a computer program product, whereby the execution of the computer program product by the terminals 10, 11, 12, 20, 21, 22 is suited to provide the terminals 10, 11, 12, 20, 21, 22 with additional functionalities.

It is possible that the telecommunication network 3 comprises circuit-switched telephony networks and packet-switched telephony networks. The circuit-switched networks may be, e.g., PSTN, ISDN, GSM, or UMTS networks, the packet-switched telephony networks may be, e.g., VoIP networks (PSTN = Public Switched Telephone Network; ISDN = Integrated Services Digital Network; GSM = Global System for Mobile Communication; UMTS = Universal Mobile Telecommunication Services). The telecommunication connection is not limited to telephony connections, In principle, any multimedia capable connection can be used for the method according to the invention.

The telecommunication network 3 comprises a server 30 which is adapted to support the telecommunication connection according to the invention. The server 30 is constituted of one or several interlinked computers, a software platform and various application programs executed on the system platform provided by the aforementioned hardware and software platform. The functionalities of the server 30 are performed by the execution of these software components by the hardware components of the server 30. Preferably, the server 30 according to the invention is installed as an independent network element. The server 30 is adapted to simultaneously serve a multitude of telecommunication connections 1020, 1121, 1222 conducted over the network 3.

For every telecommunication connection 1020, 1121, 1222 subscribed to the service provided by the server 30, the server 30 sets up a dedicated connection control function 40, 41, 42. From a functional point of view, the connection control function 40 comprises a control unit 401, a detector unit 402, and a conference unit 403. The connection control function 40 shown in Fig. 1 is associated with the telecommunication connection 1020. Although not shown in Fig. 1, also each of the other connection control functions 41, 42 associated with the telecommunication connections 1121, 1222 comprises a control unit, a detector unit, and a conference unit of its own. Each of the connection control functions 40, 41, 42 can access a data base 31 of the server 30 where user profiles of the participants are stored.

It is possible that the control unit 401, the detector unit 402, and the conference unit 403 are no hardware units but only virtually realised by means of a corresponding software product running on the server 30. But it is also possible that the control unit 401, the detector unit 402, and the conference unit 403 are dedicated physical units of the server 30. It is also possible that each physical or virtual unit serves several of the telecommunication connections 1020, 1121, 1222 in parallel.

The telecommunication network 3 also comprises a media resource data base , 50 where media resources are stored. It is possible that the media resource data base 50 is provided by a provider of media resources. Further, it may be possible that the server 30 and the media resource data base 50 are provided by the same provider. Alternatively or in addition, the participants of the telecommunication connections 1020, 1121, 1222 may be able to upload media resources of their own to the media resource data base 50.

In another embodiment, instead the server 30 being installed in the network 3 as an autonomous server of a provider, the server 30 is locally implemented as a module of a telecommunication terminal 10, 11, 12, 20, 21, 22. It is possible , that every subscriber of the telecommunication connections 1020, 1121, 1222 acquires a software or hardware server module 30 to be installed in his telecommunication terminal 10, 11, 12, 20, 21, 22. The server module 30 is adapted to cooperate with the other components of the telecommunication terminal 10, 11, 12, 20, 21, 22 and to provide the service according to the invention on a local basis.

This means that the functionality of a central server 30 may be implemented in the telephone terminal 10, 11, 12, 20, 21, 22 of a communication participant. If a central server 30 is not available on the network 3, a participant who wishes to use the provision of a service according to the invention may use a server module 30 installed on his telephone terminal 10, 11, 12, 20, 21, 22. The server module 30 implemented in the telephone terminal 10, 11, 12, 20, 21, 22 comprises all elements and units necessary for the provision of the service in analogy to a central network-based server 30. For example, a mobile phone 10, 11, 12, 20, 21, 22 may comprise an electronic unit with a control module, a detector module and a conference module providing functions equivalent to the functions provided by the corresponding control, detector, and conference units of a central server 30 of the network 3.

User profiles and media resource files may be stored in a memory unit also comprised within the electronic unit, i.e., the telephone terminal 10, 11, 12, 20, 21, 22 stores the user profiles and media resource files locally in the memory unit and inserts the media resource files into the communication channel upon a trigger event. Alternatively, the media resource files and/or the user profiles are stored on a separate data base 50 installed in the telecommunication network 3 and are retrieved from the data base 50 by the local server module 30 implemented in the telephone terminal 10, 11, 12, 20, 21, 22.

The bearer and/or signalling streams originating from a participant using a telephone terminal 10, 11, 12, 20, 21, 22 with integrated server module 30 are analysed for trigger events before transmission of the data streams via the network 3, In case of detection of a trigger event, the detector module 402 notifies the control unit 401 which searches for an associated media file in a data base 31 integrated into the server module 30. The functionality of the server module 30 is equivalent to the functionality of the central network-based server 30.

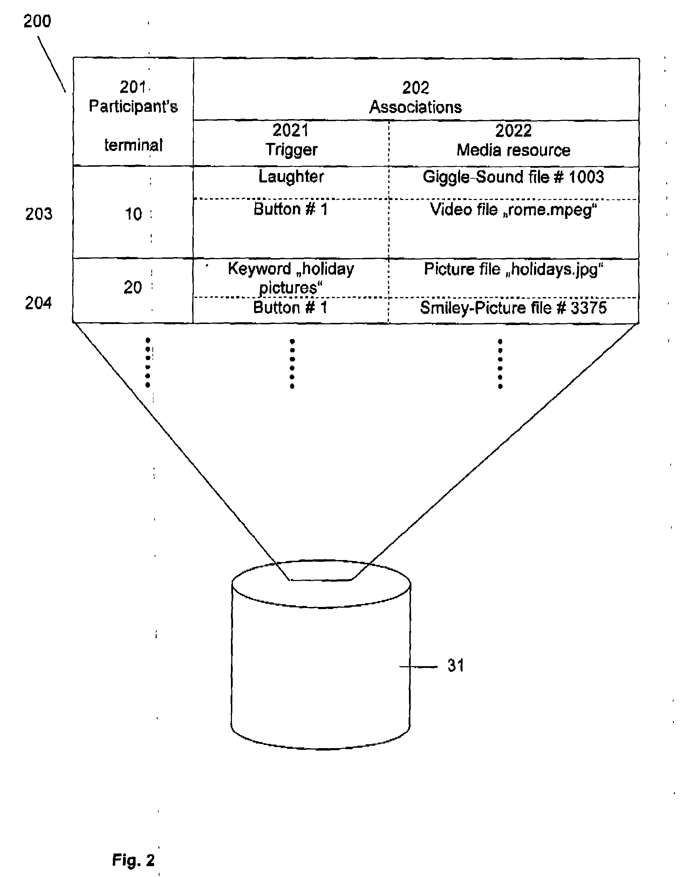

Fig. 2 shows a table 200 containing user profiles assigned to the terminals 10 and 20 of the participants of the telecommunication connection 1020 of Fig. 1. The table 200 is stored in the data base 31 and is accessible from the terminals 10, 20 by the participants of the telecommunication connection 1020 for update and amendment of the user profiles.

The table 200 comprises a column 201 listing the terminals 10, 20 of the participants for which a user profile has been created, and a column 202 comprising the associations created for the respective participants. The column 202 is divided into two columns, one column 2021 containing the trigger events as defined by the respective participant assigned to terminal 10, 20, and another column 2022 containing the media resource associated with the trigger event of column 2021. The table 200 comprises two lines corresponding to the terminals 10, 20 of the two participants of the telecommunication connection 1020. The table 200 may also comprise user profiles for the terminals 11, 12, 21, 22 of the participants of the other telecommunication connections 1121, 1222.

In the present embodiment, line 203 comprises the user profile of the user of terminal 10: a communication context related event association associates a laughter occurring during the telecommunication connection 1020 with a file #1003 of the media resource data base 50. The file contains a giggling sound and is meant to induce an even more intensive laughter of the participants of the telecommunication connection 1020. The other association relates to the pressing of button #1 on the telecommunication terminal 10 as trigger event. If the button #1 is pressed on the terminal 10, the video file "rome.mpeg" is to be embedded in the telecommunication connection.

Line 204 comprises the user profile of the user of terminal 20: a communication context related event association associates the keyword "holiday pictures" to the picture file "holidays.jpg". And the other association relates to the pressing of button #1 on the telecommunication terminal 20 as trigger event. If the button #1 is pressed on the terminal 20, a smiley picture file #3375 of the media resource data base 50 is to be embedded in the telecommunication connection.

In this example, the files with numbers are meant to be commercial files provided by a commercial media resource provider. These commercial files may be available from the media resource data base 50, e.g., by a once-only payment. The other files with names may be media resource files that have been uploaded to a memory area of the media resource data base 50 which is accessible by the participants 10, 20.

The data base 31 holding the user profiles may be comprised within the server 30. It is also possible that the user profile data base 31 and the media resource data base 50 are comprised in a single data base, preferably managed by the provider of the telecommunication connection service according to the invention. Participants 10, 20 of the telecommunication connection 1020 may configurate and access the user profile data base 31 via a web/WAP based interface, a SMS, or a voice activated interface (WAP = Wireless Access Protocol; SMS = Short Message Service).

It is possible that a user subscribing to the media provision service of the server for the first time is assigned a standard user profile with default functions as offered by the provider. For example, the pressing of the buttons may trigger the provision of different sounds to the telecommunication connection. The user may simply keep this standard user profile or may amend it according to his wishes.

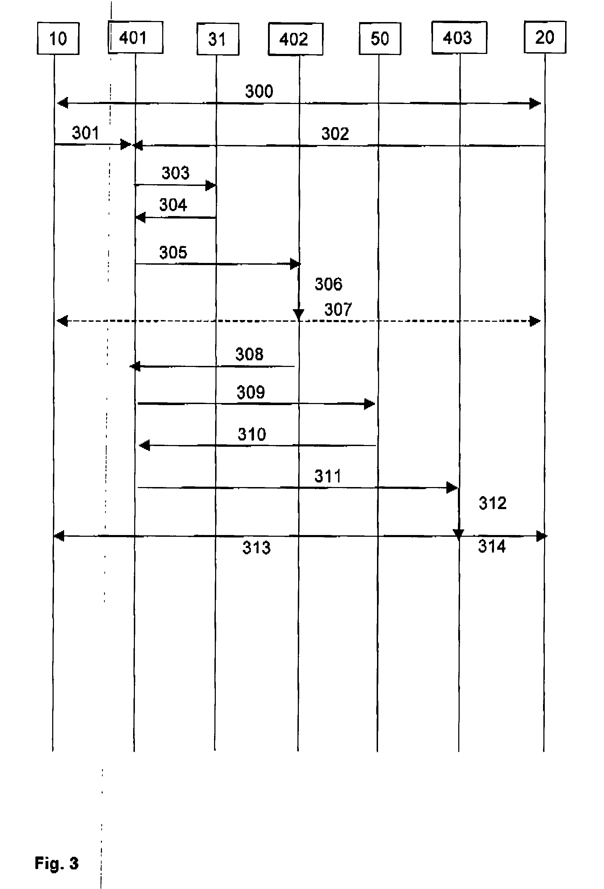

Fig. 3 shows a message sequence chart of messages exchanged between the telephone terminals 10, 20, the media resource data base 50, and the components 31, 401, 402, 403 of the server 30 of Fig. 1, namely the control unit 401, the detector unit 402, the conference unit 403, and the data base 31, according to another embodiment of the invention.

Between the users of the telephone terminals 10, 20, a telecommunication connection 300 has been established via the network 3. Both participants participating in the telecommunication connection 300 exchange realtime data streams such as realtime speech data with each other by means of their telephone terminals 10, 20.

The control unit 401 retrieves messages 301, 302 comprising information regarding the identity of the participants of the telecommunication connection 300. The messages 301, 302 may be dedicated messages for setup of the telecommunication connection 300. Alternatively, the control unit 401 may intercept signalling messages sent during the establishment of the telecommunication connection 300, whereby the signalling messages provide information about the identity of the participants of the telecommunication connection 300. The identity of the participants may be determined by the SIM of their mobile telephone terminals 10, 20, or by the telephone numbers of their telephone extensions (SIM = Subscriber Identity Module).

The contrbl unit 401 uses the identity information of the participants to access in step 303 the data base 31 where the user profiles are stored and select from the data base 31 the corresponding user profiles of the participants of the telecommunication connection 300. The user profile information is transmitted as message 304 to the control unit 401. In another embodiment, the data base 31 is an active "intelligent" storage unit with searching or selecting functions. Then the identity information of the participants is transmitted as message 303 from the control unit 401 to the data base 31. The corresponding user profiles of the participants of the telecommunication connection 300 are selected by the data base 31 and the relevant user profile information is transmitted as message 304 from the data base 31 back to the control unit 401.

The control unit 401 extracts the trigger information from the user profile information and transmits the trigger information as message 305 to the detector unit 402, i.e., the control unit 401 provides the detector unit 402 with the trigger information. As shown in Fig. 2, the trigger information for the user of terminal 10 comprises the communication context related event "laughter" and the pressing of button #1 of the terminal 10, the trigger information for the user of terminal 20 comprises the keyword "holiday pictures" and the pressing of button #2 of the terminal 20. The communication media stream between the telephone terminals 10, 20 is monitored by the detector unit 402. The data streams arriving at the detector unit 402 from the telephone terminals 10, 20 are analysed by the detector unit 402 for a pre-defined trigger event and, after analysis, forwarded to the respective other telephone terminal 10, 20.

If the data streams from the telephone terminals 10, 20 contain a trigger event, it will be detected by the detector unit 31, The trigger event may be a specific event present in the communication data itself, such as laughter, a long speech pause, or a keyword uttered by one of the participants. The trigger event may also be the pressing of a button on the keypad of one of the telephone terminals 10, 20, or it may be a trigger signal from outside the telecommunication environment, e.g., from a separate, external sensor.

In any case, the trigger event and the associated media resource file must have been predefined by the participants using the telephone terminals 10, 20 and stored as said user profiles in the data base 31. It is possible that the participants mark a suitable media file and associate it with a trigger event, preferably supported by a dedicated software application. Each trigger event must have one associated media file, while a media file may be used for one or more associated trigger events.

The user of terminal 20 may press the button #1 on his terminal 20 during the telecommunication. The detector unit 402 detects this trigger event and releases a corresponding message 308 to the control unit 401, the message 308 specifying the origin and the type of the trigger event, i.e. the fact that the trigger event was released by the user of the terminal 20, and that the trigger event was the pressing of the button #1. The control unit 401 identifies the media resource associated to the trigger event according to the user profile tables. It identifies that the smiley picture #3375 has to be retrieved.

It is possible that the detector unit 401 used for detecting the trigger event only monitors the bearer stream and/or signalling stream of the participant initiating the service. This would be the case, if a participant wants his holiday movie to be replayed to his communication partners when he speaks the words "holiday movie". Usually, it will be sensible to apply the mechanism for detection of communication context related events to all bearer stream and/or signalling stream of the communication connection, i.e., originating from all participants of the communication connection. For example, it would be suitable to apply a media file to accompany and intensify a participant's laughter to the communication data stream of all communication participants.

To detect the pressing of the button #1, the detector unit 402 may utilise a DTMF detector installed in the network 3. To provide a high quality media service, the DTMF sound should not be heard by the communication participants when a key on the keypad is pressed. This is achieved by filtering out the DTMF sound from the communication stream and inserting the corresponding sound and/or video associated with the trigger event instead. In order to detect communication context related trigger events such as a keyword, laughter, or a pause, the detector unit 31 may apply speech recognition and/or context based detection techniques.

If the media service of the type "push for media" is used, it is possible that the pressing of a key on the keypad of a telephone terminal 10, 20 is not detected by the detector unit 401 monitoring the communication data but that the pressing of the key is directly signalised via a signalling channel to the control unit 401 of the server 30 by the telephone terminals 10, 20.

The control unit 401 transmits the information regarding the media resource as message 309 to the media resource data base 50 where the corresponding file is selected and transmitted as message 310 to the control unit 401. From the control unit 401 the media resource file is forwarded as message 311 to the conference unit 403. It is also possible that the selected media resource file is transmitted directly from the media resource data base 50 to the conference unit 403 to save bandwidth.

It is also possible that the participants only mark their selected files in the data base, and that the control unit 401 accesses the data base with the trigger information to find the associated marked media file carrying a sort of tag comprising the identity of the participant who selected the file and the associated event. That means that a part of the information of the user profiles may be contained within the media resource data base 50.

It is also possible that the media resource file has been provided by the user of the terminal 20 and has been stored in the media resource data base 50. The media resource data base 50 may be a central data base installed on the network 3. For example, the participant using the telephone terminal 20 has found a funny smiley on the Internet, has downloaded the corresponding image file to his mobile phone and has transmitted the image file via MMS over the network 3 to the media resource data base 50 (MMS = Multimedia Message Service). He has defined in his user profile that the image file should be embedded into the communication connection he participates in as a sort of joke whenever he presses the button #1 on his terminal keypad.

It is also possible that the data base 50 comprises a plurality of different media resource files provided, managed and kept up-dated by a provider of the media service. The provider may impose a charge for selecting a media file as compensation for his efforts to maintain the data base. All subscribers of the telecommunication connections 1020, 1121, 1222 can access the central network-installed data base 50, e.g., via mobile phone, search the central data base 50 and look for interesting media files which may suit their demands. For example, a subscriber browses through the provider's data base 50, finds a funny sound and marks the corresponding audio file as his selection. Moreover, he defines laughter occuring in one of his communication connections as the trigger event associated with the marked audio file. His selection of the audio file in the data base 50 is automatically taken over into his user profile file stored in the data base 31, as shown in Fig. 2.

The central data base 34 provided by a provider of the media service may also serve as a kind of media file market where subscribers can purchase interesting, audio and video clips. They may download these files and store them on their individual, participant specific media file data bases 50 to use them in the described method, in analogy to the established methods used to purchase jingles and ringtones for mobile phones.

Alternatively, each telecommunication terminal 10, 20 may comprise a separate media resource data base memory unit, acting as a personal decentral media resource data base 50.

In step 312, the conference unit 403 modifies the communication data stream by injecting the media resource file into the communication data stream. As a result, the media resource file, i.e., the smiley, is transmitted as image data 313, 314 to the terminals 10, 20 of the telecommunication connection.

Based on the multimedia capabilities of the participating telecommunication terminals 10, 20, the server 30 determines how the media resource file is provided to each of the telecommunication terminals 10, 20. For example, a video clip is to be embedded in the telecommunication connection 1020 according to the user profile of the initiating user of the terminal 10, but the user's communication partner uses a telecommunication terminal 20 without video capability. Then the server decides to transfer only the audio data of the video clip to the telecommunication terminal 20. Thus, the server tries to provide the best possible service with in dependence of the user profiles and the multimedia capabilities of the participating telecommunication terminals.

In another embodiment of the invention, it is possible that a participant uses a photo-per-command service realised by a method according to the invention. For example, Alex calls his aunt Clara via his visual telephone, possibly working under the SIP protocol, to ask her if she is doing well (SIP = Session Initiation Protocol). During the talk, they descend to Alex's skiing holidays he returned from one week ago. Alex has subscribed to a photo-per-command service offered by his provider and has uploaded his holiday photos to the media resource data base 50 of the provider. As he would like to show the photos to his aunt, he says during the talk: "Please start photo service." This utterance is detected and recognised as a keyword by the detector unit 402. This triggers the import of the photos stored in the media resource data base 50 into the media stream of the telecommunication talk.

Now, in one part of the screen of their visual telephones, the holiday photos are being displayed while they are still able to see each other in the remaining part of the screen and to talk to each other. By voice control, e.g., be speaking "Next/Previous picture, please.", Alex is able to navigate through his photo series and to show all of his photos.

In a further embodiment of the invention, it is possible that the method according to the invention is used to perform a video conference. For example, a video conference is to be conducted at a firm with the demand of decision making. All participants run on adrenaline because the decisions have to be reached until the next moming. In the run-up to the video conference, a meticulaus time schedule has been worked out and all speakers know exactly how much time they have been allocated for their presentation.

For the operation of the video conference, the new video conference software with time management service is used. This service runs network based and has information about the duration of the presentations. During each presentation, the remaining time is automatically shown in the lower right corner of the presentation screen. Also automatically, each speaker is informed with a pre-recorded voice message five minutes before expiration of his time. This means the detector unit 402 is set to detect the time limit of five minutes. The detection of the five minute time limit triggers the import of the pre-set voice message into the voice media stream of the participant.

In another embodiment of the invention, it is possible that a participant uses the provision of a telecommunication connection to display a smiley on the display of his mobile phone 10, 11, 12, 20, 21, 22. The detector unit 402 analyses the speech speed and the speech mood of his communication partner and triggers the display of a corresponding smiley: the happier his communication partner seems to be judging from the manner of his speech, the bigger is the smile of the smiley.

In still another embodiment of the invention, it is also possible that the provision of a telecommunication connection is applied to an Internet chat. The detector unit 402 analyses the words used in the chat messages. If it detects a keyword, a text file is displayed on the computers of the communication partners or on all participating computers, or a audio file or a video file is replayed on the computers of the communication partners or on all participating computers.

In a further embodiment of the invention, the provision of a telecommunication connection applies in parallel to several detection channels, i.ie., the detector unit 402 is adapted to detect a trigger event in the telecommunication connection channel and/or another detection channel. If needed, one of said parallel channels can be configured to be prioritised.

For example, a security officer in a video room is permanently connected over voice channel with the personnel in an armoured car on duty. The armoured car personnel carry a pulse sensor watch which measures their excitation level. The measured values are transmitted via a second channel, a sensor data channel, to a detector at the security office. If someone of the personnel is endangered, this is detected by the detector on the sensor data channel. The detector triggers that a warning message file is automatically replayed on the voice channel to the security officer who then may take measures.

## Claims

1. A method of providing a telecommunication connection (1020,1121, 1222), the method comprising the steps of:
establishing a telecommunication connection (1020, 1121, 1222) between telecommunication terminals (10, 11, 12, 20, 21, 22) assigned to telecommunication participants;
exchanging streamed media between said telecommunication terminals (10, 11, 12, 20, 21, 22);
**characterised in**
**that** the method further comprises the steps of:
when detecting a pre-defined trigger event during said telecommunication connection (1020, 1121, 1222), accessing a data base (50) for retrieving a media resource associated with said trigger event;
injecting said media resource in the exchanged streamed media during said telecommunication connection (1020, 1121, 1222).

2. The method of claim 1,
**characterised in**
**that** the method comprises the steps of:
creating and storing a user profile assigned to one of said telecommunication participants, the user profile comprising an association between the trigger event and the media resource as defined by the one of said telecommunication participants;
selecting the user profiles available for said telecommunication participants;
providing a detector unit (402) with information about the trigger events defined in said user profiles;
monitoring said telecommunication connection (1020, 1121, 1222) for detection of said trigger events during said telecommunication connection (1020, 1121, 1222).

3. The method of claim 1,
**characterised in**
**that** said media resource comprises content of one or more of the following media: text, still picture, audio, video.

4. The method of claim 1,
**characterised in**
**that** the trigger event is the pressing of a button on one of said telecommunication terminals (10, 11, 12, 20, 21, 22).

5. The method of claim 1,
**characterised in**
**that** the trigger event is a communication context related event,

6. The method of claim 1,
**characterised in**
**that** the trigger event is an external signal.

7. The method of claim 1,
**characterised in**
**that** the method further comprises the step of:
uploading a media resource to said data base (50) by a telecommunication participant.

8. A server (30) for supporting a telecommunication connection (1020, 1121, 1222) which is established between telecommunication terminals (10, 11, 12, 20, 21, 22) assigned to telecommunication participants for the exchange of streamed media between said telecommunication terminals (10, 11, 12, 20, 21, 22),
**characterised in**
**that** the server (30) comprises a detector unit (402) for detecting a pre-defined trigger event during said telecommunication connection (1020, 1121, 1222) and a control unit (401) which is adapted to access, when the detector unit (402) detects a pre-defined trigger event during said telecommunication connection (1020, 1121, 1222), a data base (50) for retrieving a media resource associated with said trigger event and inject' said media resource in the exchanged streamed media during said telecommunication connection (1020, 1121, 1222).

9. The server of claim 8,
**characterised in**
**that** the control unit (401) is further adapted to create a user profile assigned to one of said telecommunication participants, the user profile comprising an association between a trigger event and a media resource as defined by the one of said telecommunication participants, select the user profiles available for said telecommunication participants from a data base (31) of the server (30) whereby said data base (31) is adapted to store said user profiles, provide the detector unit (402) with information about the trigger events defined in said user profiles, and that the detector unit (402) is further adapted to monitor said telecommunication connection (1020, 1121, 1222) for detection of said trigger events during said telecommunication connection (1020, 1121, 1222).

10. The server of claim 8,
**characterised in**
**that** the server (30) is a central network server or a part of the telecommunication terminal (10, 11, 12, 20, 21, 22) of a telecommunication participant.
